# EUROPÄISCHE PATENTSCHRIFT

(11) **EP 1 671 429 B1**
(45) Veröffentlichungstag und Bekanntmachung des Hinweises auf die Patenterteilung: **16.09.2009**
(21) Anmeldenummer: 04790355.4
(22) Anmeldetag: 07.10.2004
(51) Int. Cl.: H04B 1/69

(54) **ULTRABREITBAND-KOMMUNIKATIONSSYSTEM FUER SEHR HOHE DATENRATEN**
ULTRA-WIDE BAND COMMUNICATION SYSTEM FOR EXTREMELY HIGH TRANSFER RATES
SYSTEME DE COMMUNICATION A BANDE ULTRALARGE CONNU POUR DES DEBITS D'INFORMATIONS TRES ELEVES

(30) Priorität: 09.10.2003 DE 10347395
(43) Veröffentlichungstag der Anmeldung: 21.06.2006
(73) Patentinhaber: IHP GmbH - Innovations for High Performance Microelectronics/Institut für innovative Mikroelektronik, 15236 Frankfurt (Oder) (DE)
(72) Erfinder: FISCHER, Gunter, 15236 Frankfurt (Oder) (DE)
(74) Vertreter: Eisenführ, Speiser & Partner
(86) Internationale Anmeldenummer: PCT/EP2004/011482
(87) Internationale Veröffentlichungsnummer: WO 2005/036768

(56) Entgegenhaltungen:
- WO-A-96/41432
- US-A- 5 677 927
- US-A- 5 687 169
- US-A1- 2004 179 582
- ZEISBERG S ET AL: "PERFORMANCE LIMITS OF ULTRA-WIDEBAND BASIC MODULATION PRINCIPLES" GLOBECOM'01. 2001 IEEE GLOBAL TELECOMMUNICATIONS CONFERENCE. SAN ANTONIO, TX, NOV. 25 - 29, 2001, IEEE GLOBAL TELECOMMUNICATIONS CONFERENCE, NEW YORK, NY : IEEE, US, Bd. VOL. 2 OF 6, 25. November 2001 (2001-11-25), Seiten 816-820, XP001099219 ISBN: 0-7803-7206-9 in der Anmeldung erwähnt
- SHALABY H M H: "Optical OPPM-CDMA receivers with chip-level detectors" IEE PROCEEDINGS : COMMUNICATIONS, INSTITUTION OF ELECTRICAL ENGINEERS, GB, Bd. 148, Nr. 1, 13. Februar 2001 (2001-02-13), Seiten 31-37, XP006016110 ISSN: 1350-2425
- WILSON R D ET AL: "Comparison of CDMA and Modulation Schemes for UWB Radio in a Multipath Environment" GLOBECOM'03. 2003 - IEEE GLOBAL TELECOMMUNICATIONS CONFERENCE. CONFERENCE PROCEEDINGS. SAN FRANCISCO, DEC. 1 - 5, 2003, IEEE GLOBAL TELECOMMUNICATIONS CONFERENCE, NEW YORK, NY : IEEE, US, Bd. VOL. 7 OF 7, 1. Dezember 2003 (2003-12-01), Seiten 754-758, XP010678166 ISBN: 0-7803-7974-8
- NEY DA SILVA J A ET AL: "Performance Comparison of Binary and Quaternary UWB Modulation Schemes" GLOBECOM'03. 2003 - IEEE GLOBAL TELECOMMUNICATIONS CONFERENCE. CONFERENCE PROCEEDINGS. SAN FRANCISCO, DEC. 1 - 5, 2003, IEEE GLOBAL TELECOMMUNICATIONS CONFERENCE, NEW YORK, NY : IEEE, US, Bd. VOL. 7 OF 7, 1. Dezember 2003 (2003-12-01), Seiten 789-793, XP010678173 ISBN: 0-7803-7974-8

## Beschreibung

Die vorliegende Erfindung betrifft ein Ultrabreitband-Informationsübertragungsverfahren gemäß dem Oberbegriff des Anspruchs 1. Weiterhin betrifft die Erfindung eine Ultrabreitband-Sendevorrichtung, eine Ultrabreitband-Empfangsvorrichtung sowie eine Ultrabreitband-Sende-Empfangsvorrichtung.

Ultrabreitbandige (ultra wide band, UWB) Datenübertragungsverfahren arbeiten mit impulsförmigen Signalen, die im Zeitbereich so geformt und angeordnet werden, dass eine möglichst homogene spektrale Leistungsdichteverteilung resultiert, die aber nie die maximal zulässige Störleistung innerhalb verschiedener Frequenzbänder übersteigt. UWB-Verfahren sind interessant, da sie nicht lizenzpflichtig sind und hohe Übertagungskapazitäten erlauben.

Anstelle der bei drahtloser Übertragung üblichen modulierten schmalbandigen Trägersignale werden bei UWB-Datenübertragungsverfahren kurze Impulse mit einer Impulstänge im Bereich von Nanosekunden oder kürzer erzeugt, die ein breites Frequenzspektrum, beispielsweise von 3,1 GHz bis 10,6 GHz aufweisen. Von ultrabreitbandiger (ultra wide band, UWB) Datenübertragungsverfahren spricht man im allgemeinen, wenn der Quotient aus der Summe und der Differenz der beiden Grenzfrequenzen 8 oder weniger beträgt. Im genannten Beispiel beträgt der Quotient etwa 1,8. Gemäß einer alternativen Definition ultrabreitbandiger Datenübertragungsverfahren soll die Bandbreite mindestens 500 MHz betragen.

Existierende impuls-basierte Ultrabreitband-Übertragungsverfahren leiden unter dem Problem, dass sie für sehr hohe Datenraten nur unzureichend geeignet sind. Der Grund dafür liegt hauptsächlich in der bei Erhöhung der Datenrate zunehmenden Intersymbol-Interferenz (ISI).

Ein Beispiel eines solchen Verfahrens ist das unter der Marke "PulsON®" bekannte Verfahren der Firma Time Domain, beschrieben in dem Dokument "PulsON^{®} Technology Overview", veröffentlicht beispielsweise unter http:// www. timedomain. com/ Files/ downloads/ techpapers/ PulsONOverview7 _01.pdf.

Bei diesem Verfahren wird die zu übertragende Information in Form einer Impulspositionsmodulation kodiert. Der zeitliche Abstand in diesem Verfahren verwendeter Gausscher Einzelzyklus-Impulse zum jeweils vorangehenden Impuls innerhalb einer das Bit repräsentierenden Impulsfolge ist entweder 100 ps geringer ("0") oder 100 ps größer ("1") als ein bit-übergreifender Zeitabstandsmittelwert von 100ns.

Unterschiedliche Kanäle werden bei diesem vorbekannten Verfahren durch eine Kodierung gebildet, bei der Einzelzyklusimpulse mit einer Verzögerung versendet werden, die einer Pseudo-Zufallsfolge gehorcht. Jedem Kanal ist eindeutig eine Pseudo-Zufallsfolge zugeordnet. Sender und zugeordneter Empfänger müssen über dieselbe Pseudo-Zufallsfolge verfügen, um mit einander auf einem Kanal kommunizieren zu können. Der Empfänger entschlüsselt im empfangenen Signal mit Hilfe der ihm zur Verfügung stehenden Pseudo-Zufallsfolge zunächst die Kanal-Kodierung und ermittelt anschließend die durch Impulspositionsmodulation dem Signal eingeprägte Information.

Für bekannte Systeme wie dieses ist die obere Grenze der möglichen Datenrate durch folgende Überlegung bestimmt: Will man die Datenrate erhöhen, so muss man die Träger der Information, die Impulse (Chips), in zeitlich kürzeren Abständen aussenden. Werden diese zeitlichen Abstände jedoch sehr kurz, typischerweise geringer als 50 ns, so können an der Empfängerantenne zeitlich abschnittsweise überlappende Signale ein und desselben Senderimpulses interferieren, die beispielsweise aufgrund von Reflexionen oder einer Mehrwegeausbreitung auf verschiedenen Wegen dorthin gelangen. Die Zuordnung einzelner Impulse (Chips) zu einem Symbol (Bit) auf Empfängerseite wird auf diese Weise erschwert oder unmöglich. Damit ist die Übertragung gestört und die höchst mögliche Datenrate überschritten.

Aus dem Dokument Zeisberg, S; Müller, C.: Siemes, J.: Performance Limits of Ultra-Wideband Modulation Principles; IEEE Global Telecommunications Conference GLOBECOM01, 25.-29. November 2001, Vol. 2, S. 816-820 ist es bekannt, in einem UWB-Übertragungsverfahren zu übertragende Bit-Information über viele Einzelimpulse (chips) zu verteilen. Da der Wert eines Bits über eine größere Anzahl von Einzelimpulsen auf ein Symbol verteilt wird, spricht man in diesem Zusammenhang von einem von einer senderseitigen Zeitspreizung (time spreading) des Symbols. Im Empfänger wird der Bitwert durch Aufsummierung der Energie der Einzelimpulse rekonstruiert ("soft integration of chip correlation"). Die Aufspreizung der Information auf viele Impulse führt jedoch zu einer dramatischen Reduzierung des Datendurchsatzes. Zur Vermeidung dieses Effektes beschreibt dieses Dokument die Möglichkeit, eine zeitliche Überlappung unterschiedlicher Symbole ("time overlap between transmitted symbols") einzuführen. Ein Beispiel solches Verfahren wird als "Overlapping Pulse Position Modulation" (OPPM) bezeichnet. Die Überlappung von Einzelimpulsen eines Symbols mit denen anderer Symbole führt jedoch zu unerwünschten Kollisionen und damit zu Bitfehlem (bit errors).

Aufgabe der Erfindung ist es, ein UWB-Übertragungsverfahren anzugeben, dass auch bei besonders hohen Datenraten eine fehlerarme Datenübertragung ermöglicht.

Die Aufgabe wird gelöst durch ein Ultrabreitband-Informationsübertragungsverfahren gemäß Anspruch 1, eine Ultrabreitband-Sendevorrichtung gemäß Anspruch17, eine Ultrabreitband-Empfangsvorrichtung gemäß Anspruch 23 sowie eine Ultrabreitband-Sende-Empfangvorrichtung gemäß Anspruch 29.

Gemäß einem ersten Aspekt der Erfindung wird ein Ultrabreitband-Informationsübertragungsverfahren bereit gestellt, dass die folgenden Schritte aufweist:

Der Sender führt einen ersten Kodierschritt aus, bei dem eine Impulsgruppe, die aus einer vorbestimmten Anzahl Einzelimpulsen gebildet wird, in Abhängigkeit von Werten einer Zufallszahlenfolge kodiert wird. Der Empfänger führt einen Korrelationsschritt aus, in dem eine Korrelation eines Empfangssignals mit einem Signalmuster durchgeführt wird. Dabei entspricht das Signalmuster der bei der Verwendung der selben Werte der Zufallszahlenfolge zu erwartenden gesamten Impulsgruppe.

Bei dem erfindungsgemäßen Ultrabreitband-Informationsübertragungsverfahren verwendet der Sender zur Übertragung von Informationen Impulsgruppen, die aus einer vorbestimmten Anzahl Einzelimpulsen gebildet werden. Diese Impulsgruppen bilden den Träger der zu übertragenden Informationen. Sie enthalten dagegen zunächst nicht die zu übertragende Informationen selbst. Für die Übertragung von Information durch die Impulsgruppe ist ein zweiter Codierschritt erforderlich, der Gegenstand weiter unten beschriebener bevorzugter Ausführungsformen ist.

Bei dem erfindungsgemäßen Verfahren wird weiterhin senderseitig eine Impulsgruppe aus einer vorbestimmten Anzahl Einzelimpulsen auf eine solche Weise gebildet, dass sich die Einzelimpulse, die eine Gruppe bilden, nach der Impulsformung teilweise zeitlich überlappen. Die zeitliche Folge der Einzelimpulse einer Impulsgruppe ist also so eng, dass die Einzelimpulse sich nach der Impulsformung teilweise überlagern. Damit überwindet das erfindungsgemäße Verfahren die bekannten UWB-Informationsübertragungsverfahren zugrunde liegende Vorstellung, dass der mittlere Abstand zwischen zwei Impulsen um ein Vielfaches größer sein muss als deren Dauer. Nach dieser bisher vorherrschenden Technik blieben die Einzelimpulse unabhängig von den verwendeten Modulationsverfahren und Kodierungsmöglichkeiten einzeln zu detektierende Ereignisse beim Empfänger. Dabei spielte es bei den bekannten Verfahren keine Rolle, ob die zu übertragende Information auf einen oder viele Impulse verteilt wurde.

Die der vorliegenden Erfindung zugrunde liegende Idee ist es dagegen, Impulsgruppen von Einzelimpulsen zu bilden, die durch eine teilweise zeitliche Überlappung der Einzelimpulse und eine Kodierung eine individuelle Struktur in Form des zeitlichen Signalamplitudenverlaufes haben. Mit anderen Worten, die Dauer der Einzelimpulse ist länger als ihr Abstand zum nächsten Impuls, wodurch durch Superposition (Überlagerung) eine resultierende individuelle Form der Gruppe entsteht, die von der Art und Dauer der zeitlichen Überlappung der Einzelimpulse abhängt. Ein wesentlicher Unterschied zu dem bekannten OPPM-Verfahren ist, dass bei dem erfindungsgemäßen Übertragungsverfahren die Einzelimpulse ein und desselben Symbols mit vorteilhafter Wirkung zur zeitlichen Überlappung gebracht werden. Dagegen verwendet OPPM Symbole aus Einzelimpulsen, wobei die Einzelimpulse einen großen zeitlichen Abstand von einander aufweisen. Unterschiedliche Symbole können bei OPPM zeitlich übereinander geschoben werden. Die Einzelimpulse unterschiedlicher Symbole dürfen sich dabei nicht zeitlich kreuzen, um Übertragungsfehler zu vermeiden.

Bei dem erfindungsgemäßen Verfahren ist die Detektion der gesendeten Impulsgruppe am Empfänger ist nur als Ganzes möglich, und zwar indem die senderseitig verwendete Kodierung dem Empfänger bekannt ist. Der Empfänger kennt im erfindungsgemäßen Verfahren insbesondere die Anzahl der Einzelimpulse pro Impulsgruppe. Er bildet unter Heranziehung der mit dem Sender gemeinsamen Zufallsfolge entsprechende Signalmuster und führt eine Korrelation eines Empfangssignals mit einem jeweiligen Signalmuster durch. Dabei wird zum einen senderseitig die Impulsgruppe in Abhängigkeit von Werten einer Zufallszahlenfolge kodiert und werden zum anderen empfängerseitig bei der Bildung des Signalmusters die selben Werte der Zufallszahlenfolge verwendet. Das Verfahren des vorliegenden Aspektes der Erfindung setzt voraus, dass Sender und Empfänger über die selbe Zufallszahlenfolge verfügen und eine Synchronisierung der Zufallszahlenfolge durchführen. Dies ist jedoch mit bekannten Mitteln leicht zu bewerkstelligen.

Der entscheidende Vorteil des erfindungsgemäßen Verfahrens ist, dass eine Impulsgruppe über die Kodierung im ersten Kodierschritt eine eindeutige Markierung enthält, die sie von anderen Impulsgruppen unterscheidbar macht. Damit kann der Empfänger zum einen zwischen den Impulsgruppen verschiedener Sender unterscheiden, die unterschiedliche Codes verwenden. Die Korrelation mit einem Signalmuster, das der zu erwartenden gesamten Impulsgruppe entspricht, schafft weiterhin die Möglichkeit, zeitlich versetzte Kopien einer Impulsgruppe (z. B. durch Mehrwegeausbreitung, Reflexion) wiederzuerkennen. Das wiederum erlaubt, den zeitlichen Abstand zwischen den Impulsgruppen zu verringern und damit die übertragene Datenrate zu erhöhen. Sogenannte RAKE-Empfänger können eingesetzt werden, um die Signalenergie zeitversetzter Kopien einer Impulsgruppe im Empfänger zusammenzuführen. Es kann daher auf die Einhaltung hoher Zeitabstände verzichtet werden. Das erfindungsgemäße Verfahren arbeitet beispielsweise noch bei Zeitabständen der Einzelimpulse voneinander im Bereich von einigen 100 ps. Das zeitliche Überlagern der Einzelimpulse führt zu einem für die gesendete Impulsgruppe charakteristischen Signalmuster, das von den Werten der Zufallszahlenfolge abhängig ist. Da der Empfänger über die selbe Zufallszahlenfolge verfügt und das der Korrelation zugeführte Signalmuster eine entsprechende Kodierung aufweist, ist es möglich auch Signalgruppen mit zeitlich überlappenden Einzelimpulsen zu erkennen und zu entschlüsseln.

Das erfindungsgemäße Ultrabreitband-Informationsübertragungsverfahren arbeitet, wie bereits oben erwähnt, unabhängig von der Art der Informationskodierung.

Die erfindungsgemäß kodierten Impulsgruppen bilden zunächst nur den Informationsträger. Die Kodierung der Information in der Impulsgruppe kann mit üblichen Verfahren erfolgen. Der Empfänger verwendet zur Bildung des Signalmusters das selbe Verfahren zur Informationskodierung. Auf diese Weise kann der Sender dann nicht nur eine für ihn bestimmt Impulsgruppe erkennen, sondern auch die darin enthaltene Information entschlüsseln.

Das erfindungsgemäße Verfahren erlaubt einem Empfänger demnach auch bei hoher Datenrate eine Erkennung und Entschlüsselung für ihn bestimmter Signale.

Mit einer genügenden Anzahl von Einzelimpulsen in einer Impulsgruppe wird eine ausreichende Energie übertragen, die es dem Empfänger ermöglicht, eine verschlüsselte Information zu ermitteln.

Bei einem bevorzugten Ausführungsbeispiel des erfindungsgemäßen Verfahrens ist ein zweiter Kodierschritt auf Seiten des Senders vorgesehen, der zeitlich vor, während oder nach dem ersten Kodierschritt durchgeführt werden kann. Im zweiten Kodierschritt wird mindestens ein als Information zu übertragender Bit-Wert in der Impulsgruppe entsprechend einer vorbestimmten Kodierregel kodiert. Die Kodierregel kann beispielsweise beinhalten, dass die Phase der Einzelimpulse je nach Bit-Wert moduliert oder nicht moduliert wird. Die Modulation kann beispielsweise eine Phasenverschiebung um den Wert ϕ beinhalten. Zu beachten ist, dass der zweite Kodierschritt zusätzlich zum ersten Kodierschritt durchgeführt wird. Das heißt, wenn die Kodierregel besagt, dass zur Übertragung eines bestimmten Bit-Wertes keine Modulation durchgeführt wird, so ist die Impulsgruppe allein entsprechend dem ersten Kodierschritt verschlüsselt.

Bevorzugt führt der Empfänger zur Ermittlung des übertragenen Bit-Wertes im Korrelationsschritt eine Korrelation des Empfangssignals mit einem ersten und mit einem zweiten zu erwartenden Signalmuster durch. Dabei ist das erste und zweite Signalmuster mit den selben Werten der Zufallszahlenfolge kodiert. Jedoch entspricht das erste Signalmuster einer Impulsgruppe, die im zweiten Kodierschritt mit einem ersten Bit-Wert kodiert wird, und das zweite Signalmuster entspricht einer Impulsgruppe die im zweiten Kodierschritt mit einem zweiten, zum ersten komplementäre Bit-Wert kodiert wird. Das Korrelationsergebnis wird je nach von Sender her empfangenen Signal nur bei der Korrelation mit einem der beiden Signalmuster ein von 0 verschiedenes Ergebnis anzeigen. Auf diese Weise kann die übertragene Information einfach ermittelt werden.

Bevorzugt erfolgt die Korrelation des Empfangssignals mit dem ersten und dem zweiten Signalmuster parallel. Es ist aber auch möglich, die Korrelation mit den beiden Signalmustern nacheinander durchzuführen.

Auch für den ersten Kodierschritt des erfindungsgemäßen Verfahrens sind unterschiedliche Kodierverfahren denkbar. In einem bevorzugten Ausführungsbeispiel werden die Einzelimpulse einer Impulsgruppe in Abhängigkeit vom jeweils aktuellen Wert der Zufallszahlenfolge phasenmoduliert. Das heißt, jeder Einzelimpuls wird entsprechend einem nur ihm zugeordneten Wert der Zufallszahlenfolge kodiert. Für eine Impulsgruppe von 8 Einzelimpulsen werden also 8 Werte der Zufallszahlenfolge verwendet.

Vorzugsweise führt der Sender zusätzlich eine Modulation des zeitlichen Abstandes aufeinanderfolgender Impulsgruppen durch. Dieser Schritt wird nachfolgend auch als erste Abstandmodulation bezeichnet. Auf diese Weise wird erreicht, dass die spektrale Energieverteilung der vom Sender aus gesendeten Signale über den gesamten verwendeten Frequenzbereich nicht die von den Regulierungsbehörden vorgeschriebene Maske überschreitet. Eine besonders einfach Variante sieht vor, dass die erste Abstandsmodulation in Abhängigkeit von der Zufallszahlenfolge erfolgt. Auf diese Weise können die bei Verwendung anderer Zufallszahlenfolgen notwendigen zusätzlichen Synchronisationsschritte zwischen Sender und Empfänger entfallen.

Mit dem erfindungsgemäßen Informationsübertragungsverfahren kann auf einfache Weise auch eine Kanalkodierung erzielt werden. Hierzu wählen Sender und Empfänger in einem bevorzugten Ausführungsbeispiel die gleiche Zufallsfolge aus einer Anzahl Zufallsfolgen aus. Der erste Kodierschritt beinhaltet damit zugleich eine Kanalkodierung. Empfänger, die aktuell auf andere Zufallszahlenfolgen zugreifen, werden im Korrelationsschritt kein für Sie bestimmtes Signal erkennen.

In einem weiteren Ausführungsbeispiel des erfindungsgemäßen Verfahrens führt der Sender zusätzlich eine Modulation des zeitlichen Abstandes der Einzelimpulse der Impulsgruppe voneinander in Abhängigkeit von Werten der Zufallszahlenfolge durch. Auf diese Weise kann die Robustheit des Funkkanals und die spektrale Energieverteilung weiter optimiert werden. Die übertragenen Signale gewinnen an Individualität, was die Wiedererkennung im Empfänger erleichtert.

Um die Synchronisation zwischen Sender und Empfänger sicher zu stellen, wird in einem weiteren Ausführungsbeispiel vor dem Beginn der Informationsübertragung eine Synchronisation der Zufallsfolge durchgeführt. In einer weiteren Ausführungsform überträgt der Sender dem Empfänger eine dem Empfänger bekannte Trainingssequenz von Impulsgruppen. Zur weiteren Erhöhung der Datenrate kann im erfindungsgemäßen Verfahren vorgesehen sein, in einer Impulsgruppe zwei Bit-Werte zu übertragen. Dabei wird ein erster Bit-Wert in einer ersten vorbestimmten Anzahl von Einzelimpulsen kodiert und ein zweiter Bit-Wert in der verbleibenden Anzahl Einzelimpulsen. Je nach Anzahl der Einzelimpulse in einer Impulsgruppe kann dieses Prinzip auch zur weiteren Erhöhung der Datenrate verwendet werden, indem pro Impulsgruppe beispielsweise vier oder acht Bit übertragen werden. Bevorzugt erzeugt der Empfänger bei diesem Ausführungsbeispiel eine entsprechende Anzahl von Signalmuster zur Ermittlung der übertragenen Bit-Werte im Korrelationsschritt. So werden beispielsweise vier Signalmuster zur Korrelation herangezogen, wenn in einer Impulsgruppe zwei Bit-Werte kodiert sind.

Zur Anpassung an aktuelle Übertragungsbedingungen ist in einem weiteren Ausführungsbeispiel des erfindungsgemäßen Ultrabreitband-Informations-übertragungsverfahrens vorgesehen, einen aktuellen Wert einer von den momentanen Übertragungsbedingungen abhängigen Größe zu ermitteln und die Anzahl der Einzelimpulse pro Impulsgruppe in Abhängigkeit von dem ermittelten aktuellen Wert festzulegen. Mit der Anzahl der Einzelimpulse wird die Kodierungstiefe wie die pro Bit-Wert übertragene Energie erhöht. Auf diese Weise kann auch unter ungünstigen Übertragungsbedingungen eine Informationsübermittlung, wenn auch mit geringfügig verminderte Übertragungsrate stattfinden.

Gemäß einem zweiten Aspekt der Erfindung wird eine Ultrabreitband-Sendervorrichtung mit einem Impulsgruppengenerator bereitgestellt. Der Impulsgruppengenerator umfasst einen Impulsgenerator, der ausgebildet ist, Einzelimpulse mit einem vorbestimmten Zeitabstand von einander abzugeben. Weiterhin einen Code-Generator, der ausgebildet ist, von den Werten einer Zufallszahlenfolge abhängige Zufallssignale abzugeben. Weiterhin umfasst der Impulsgruppengenerator eine Kodiereinheit, die ausgebildet ist, einen vom Impulsgenerator abgegebenen oder abzugebenden Einzelimpuls in Abhängigkeit vom aktuellen Zufallssignal zu kodieren. Schließlich umfasst der Impulsgruppengenerator eine Steuereinheit, die mit dem Impulsgenerator verbunden und ausgebildet ist, den Impulsgenerator zu vorbestimmten Zeitpunkten zur Abgabe einer Impulsgruppe mit einer vorbestimmten Anzahl von kodierten Einzelimpulsen mit vorbestimmten Zeitabständen voneinander anzusteuern.

Die Ultrabreitband-Sendevorrichtung ermöglicht die Übertragung von Informationen mit Hilfe des Verfahrens gemäß dem ersten Aspekt der Erfindung.

Bei einem bevorzugten Ausführungsbeispiel der erfindungsgemäßen Ultrabreitband-Sendevorrichtung ist die Steuereinheit ausgebildet, den Impulsgenerator anzusteuern, eine Modulation auch des zeitlichen Abstandes aufeinanderfolgender Impulsgruppen durchzuführen (erste Abstandsmodulation). Bei einem weiteren Ausführungsbeispiel der Erfindung ist die Steuereinheit ausgebildet, die erste Abstandmodulation derart zu steuern, dass die spektrale Energieverteilung vom Sender ausgehender Signale vorbestimmte Grenzwerte nicht überschreitet.

Bei einem weiteren Ausführungsbeispiel der erfindungsgemäßen Ultrabreitband-Sendevorrichtung erfolgt die erste Abstandsmodulation in Abhängigkeit von der Zufallszahlenfolge.

Bei einem weiteren Ausführungsbeispiel ist die Steuereinheit ausgebildet, den Impulsgenerator zu einer Modulation des zeitlichen Abstands der Einzelimpulse der Signalimpulsgruppe voneinander in Abhängigkeit von Werten der Zufallszahlenfolge anzusteuern (zweite Abstandmodulation).

Gemäß einem dritten Aspekt der Erfindung wird eine Ultrabreitband-Empfangsvorrichtung mit einem Impulsgruppengenerator bereit gestellt. Der Impulsgruppengenerator entspricht dem der erfindungsgemäßen Ultrabreitband-Sendevorrichtung. Das Signalmuster, das die erfindungsgemäße Empfangsvorrichtung erzeugt, entspricht der intern in der Sendevorrichtung erzeugten Impulsgruppe. Bevorzugt hat der Impulsgruppengenerator der Empfangsvorrichtung zusätzlich eine Filtereinrichtung, die ausgebildet ist, die Impulsgruppe entsprechend eine vorbestimmten Filtercharakteristik zu modifizieren. Die Filtercharakteristik entspricht vorzugsweise der Filtercharakteristik der Antenne des Senders. Bevorzugt werden weitere bekannte Einflussgrößen in der Filtercharakteristik mit berücksichtigt. Dies kann insbesondere bei festinstallierten Übertragungseinrichtungen sinnvoll sein, in denen bekannte Quellen von Signalverzerrungen oder Reflexionen auf dem Übertragungsweg berücksichtigt werden können.
Bei einem weiteren Ausführungsbeispiel weist der Impulsgruppengenerator der Empfangsvorrichtung eine zweite Kodiereinheit auf, die ausgebildet ist, mindestens einen Bit-Wert in der Impulsgruppe entsprechend einer vorbestimmten Kodierregel zu kodieren.

Bei dieser Ausführungsform ist die zweite Kodiereinheit bevorzugt ausgebildet, zusätzlich in einer Kopie der Impulsgruppe den komplementären Bit-Wert entsprechend der vorbestimmten Kodierregel zu kodieren. Der Impulsgruppengenerator gibt hierbei ein erstes und ein zweites Signalmuster mit komplementären Bit-Werten aus. Diese können dann im Korrelationsschritt zur Ermittlung des in einem Empfangssignal kodierten Bit-Wertes herangezogen werden.

Bevorzugt weist die Korrelationseinheit zwei Korrelatoren auf, deren erster eine Korrelation des Empfangssignals mit dem ersten Signalmuster und deren zweiter eine Korrelation des Empfangssignals mit dem zweiten Signalmuster ermittelt. Eine solche Anordnung ermöglicht die parallele Ermittlung des übertragenen Informationswertes. Nur einer der beiden Korrelatoren wird auf das Empfangssignal "ansprechen". Die übertragenen Information ist dann eindeutig daran zu erkennen, welcher Korrelator auf das Empfangssignal angesprochen hat.

Gemäß einem vierten Aspekt der Erfindung wird eine Ultrabreitband-Sende-Empfangsvorrichtung mit einer Ultrabreitband-Sendevorrichtung gemäß dem zweiten Aspekt der Erfindung und einer Ultrabreitband-Empfangsvorrichtung gemäß dem dritten Aspekt der Erfindung bereitgestellt.

Bevorzugte Ausführungsformen der erfindungsgemäßen Sende-Empfangsvorrichtung ergeben sich aus den oben beschriebenen Ausführungsbeispielen der Sendevorrichtung und der Empfangsvorrichtung.

Weitere Vorteile und Merkmale der Erfindung werden nachfolgend anhand von Ausführungsbeispielen unter Bezugnahme auf die Figuren beschrieben. Es zeigen:
- Figur 1: einen Einzelimpuls in idealer (a), leicht verzerrter (b) und typischerweise empfangener Form (c);
- Figur 2: zwei Ausführungsbeispiele von Impulsgruppen;
- Figur 3: ein Ausführungsbeispiel eines erfindungsgemäßen Ultrabreitband-Senders; und
- Figur 4: ein Ausführungsbeispiel eines Ultrabreitband-Empfängers.

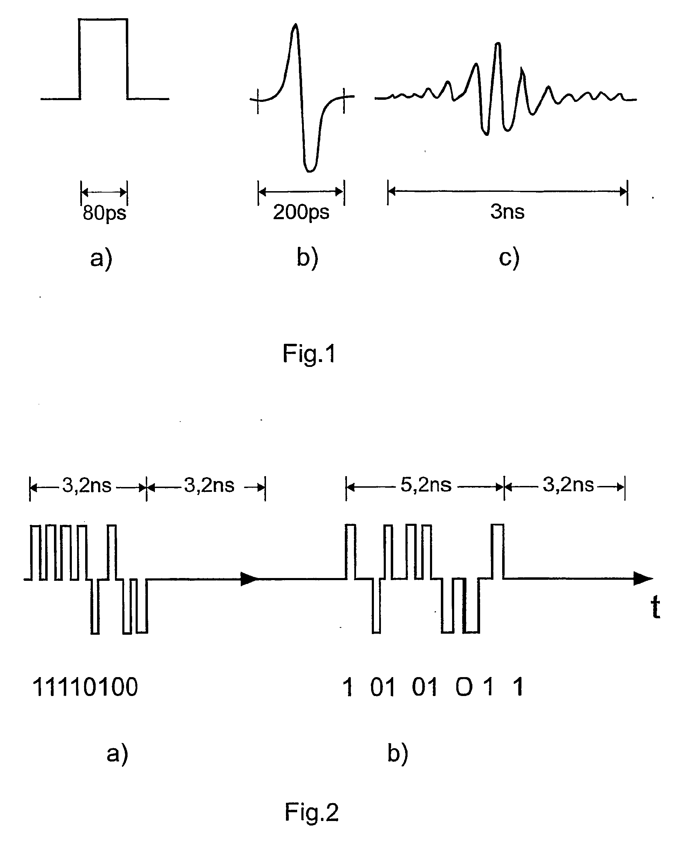

Figur 1 a zeigt eine Impulsform eines Einzelimpulses, wie er einem Ausführungsbeispiel der vorliegenden Erfindung als ideale (nicht reale) Impulsform zugrunde liegt. Bei der in Figur 1a gezeigten Impulsform handelt es sich um einen Rechteckimpuls. Die Flanken des Rechteckimpulses haben einen Zeitabstand von 80 ps voneinander. Auf Grund der idealerweise vertikalen Anstiegs- und Abstiegsflanken des Rechteckimpulses weist dieser ein unendlich breites Frequenzspektrum auf. Mit Ultrabreitband-Sendem in diesem Zeitbereich erzielbare reale Impulsformen weichen von der Rechteckform ab, selbst wenn der verwendet Impulsgenerator zur Erzeugung eines nahezu idealen Rechteckimpulses in der Lage ist.

Figur 1b) zeigt als Ausführungsbeispiel einer realen Impulsform einen so genannten Gaussschen Monozyklus. Der hier dargestellte Gausssche Monozyklus hat in seiner Amplitude zunächst einen positiven Ausschlag, der vom Maximum aus entlang einer abfallenden Flanke bis zu einem negativen Maximalausschlag gleicher Amplitude wie der positive Maximalausschlag abfällt. Anschließend steigt die Amplitude wieder auf ihren Ausgangswert an. Diese Impulsform ist um eine durch den Nulldurchgang der abfallenden Flanke verlaufende vertikale Gerade spiegelsymmetrisch. Die zeitliche Breite des hier dargestellten Gaussschen Monozyklus beträgt 200 ps. Ein solcher Gaussscher Monozyklus entsteht beispielsweise auf Grund der begrenzten Filtercharakteristik der in einem Sender verwendeten Bauelemente aus einem idealen Rechteckimpuls, wie er in Figur 1 a gezeigt ist.

Figur 1 c) zeigt eine Impulsform, die dem von einem Ultrabreitband-Sender ausgesendeten Signal eines Einzelimpulses entspricht. Die dargestellte Impulsform weist in ihrer Amplitude eine Vielzahl von Schwingungen auf, die sich in etwa symmetrisch um einen mittleren Maximalausschlag gruppieren. Zu den Rändern hin nimmt die Amplitude der Schwingungsmaxima und -minima ab. Die gesamte Impulsform erstreckt sich zeitlich über etwa 1 bis 2 ns.

Die vorstehend im Zusammenhang mit den Figuren 1a) bis 1c) genannten Zeitangaben sind als Beispiele zu verstehen. Es versteht sich, dass je nach verwendeten Bauelementen in einem Sender oder Empfänger auch andere Impulsbreiten und -formen erzielt werden können, die sich in gleicher Weise zur Ausführung des erfindungsgemäßen Verfahrens eignen.

Bei den nachfolgend dargestellten Ausführungsbeispielen wird davon ausgegangen, dass der Sender auf Grund der spektralen Filtercharakteristik der in ihm verwendeten Bauelemente Einzelimpulse mit der in Figur 1 c gezeigten Impulsform aussendet. Dies stellt im Hinblick auf die Unterscheidbarkeit der Einzelimpulse anhand ihrer Impulsform ein "worst-case"-Szenario dar. Die Einzelimpulse überlappen zeitlich und bewirken im Empfangssignal aufgrund der Interferenz entweder eine Verstärkung oder eine Abschwächung. Dies führt typischerweise dazu, dass Einzelimpulse einer Impulsgruppe im empfangenen Signal nicht mehr voneinander trennbar sind.

Diese Überlegungen bilden einen Ansatzpunkt des erfindungsgemäßen Verfahrens, das nun anhand der Beschreibung von zwei Ausführungsbeispielen von Impulsgruppen näher erläutert wird. Bei den nachfolgend anhand von Figur 2 erläuterten Impulsgruppen werden jedoch zur Verdeutlichung der Darstellung ideale Einzelimpulse entsprechend Figur 1a dargestellt. Es versteht sich, dass die vom Sender abgestrahlte reale Impulsform je nach spektraler Bandbreite der in ihm verwendeten Bauelemente eine Impulsform aufweist, die einer der in Figur 1 dargestellten Impulsformen jeweils mehr oder weniger ähnelt.

Figur 2 zeigt zwei Ausführungsbeispiele von Impulsgruppen wie sie im erfindungsgemäßen Übertragungsverfahren erzeugt werden können. Beide Impulsgruppen werden aus 8 Einzelimpulsen mit einem mittleren zeitlichen Abstand von jeweils 400 ps zueinander gebildet. Unter dem zeitlichen Abstand ist hier die Zeitspanne zwischen dem Beginn eines Einzelimpulses und dem Beginn eines nachfolgenden Einzelimpulses zu verstehen. Im Ausführungsbeispiel der Figur 2a) ist der Zeitabstand zwischen den Einzelimpulsen der Impulsgruppe fest und beträgt 400 ps. Legt man zusätzlich eine Impulsbreite von 80 ps pro idealem Einzelimpuls zu Grunde, beträgt die von allen 8 Einzelimpulsen der Impulsgruppe umfasste Zeitspanne 3,2 ns. Dies ist die so genannte Burst-Dauer.

Die Einzelimpulse sind entsprechend den Werten einer Zufallszahlenfolge binär phasenverschoben. Wird ein Einzelimpuls mit einer positiven Amplitude gebildet, soll dies in den vorliegenden Ausführungsbeispielen einer logischen 1 entsprechen, und ist Einzelimpuls negativ, so bedeutet dies vorliegend eine logische 0. Der Code-Wert wird beispielsweise mit Hilfe eines 8 Bit breiten Quasi-Zufallszahlengenerator erzeugt. Der in der Impulsgruppe der Figur 2a) enthaltene Code entspricht demnach "11110100". An die Impulsgruppe schließt sich eine Ruhezeit (Guard-Time) von 3,2 ns an.

Das in Figur 2b) gezeigte Ausführungsbeispiel einer Impulsgruppe unterscheidet sich von dem der Figur 2a) zunächst im Zufallszahlen-Code. Hier ist der Code "10101011". Weiterhin unterscheidet sich die Impulsgruppe der Figur 2b) von der der Figur 2a) dadurch, dass der Zeitabstand zwischen den Einzelimpulsen nicht gleichförmig 400 ps beträgt, sondern variiert. Die Modulation der Zeitabstände der Einzelimpulse folgt ebenfalls dem Code der Zufallszahlenfolge. Ist der Codewert eine logische 1, so ist der Zeitabstand zum nachfolgenden Einzelimpuls erhöht. Ist der Code-Wert eine logische 0, so ist der Zeitabstand unverändert gegenüber dem vorgegebenen Wert von 400 ps. Nimmt man als Beispiel für die Zeitmodulation eine Vergrößerung des Abstandes zwischen zwei Einzelimpulsen von 400 auf 800 ps im Falle einer logischen 1, so ergibt sich eine Burst-Dauer von 5,2 ns, an die sich wiederum ein Guard-Intervall von 3,2 ns anschließt. Es versteht sich, dass auch andere Zeitabstände für die Zeitmodulation verwendet werden können. Bei dem Ausführungsbeispiel der Figur 2b) ist die Burst-Dauer abhängig vom aktuellen Code der Impulsgruppe. Die Verzögerung verschwindet, wenn alle Einzelimpulse den Code 0 tragen. Je nach gewähltem Modulationsabstand erhöht sich die Verzögerung. Am höchsten ist sie für den Code 255, der 8 logischen Einsen entspricht.

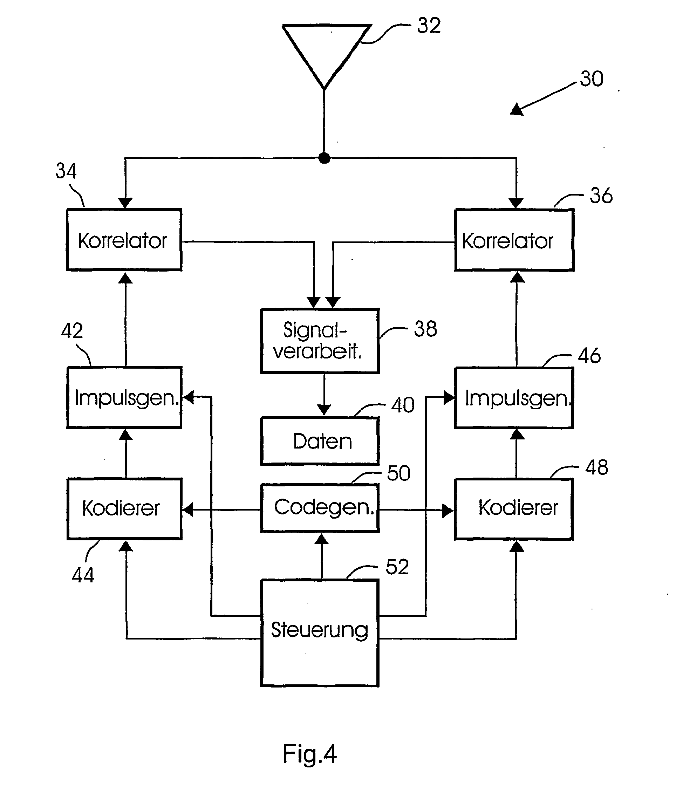

Zur Kodierung eines Informationswertes in den in Figur 2a) und b) dargestellten Impulsgruppen kann in einem Ausführungsbeispiel eine weitere Phasenmodulation vorgenommen werden. Für eine zu übertragende logische 1 wird die gesamte Impulsfolge invertiert und für eine zu übertragende logische 0 wird die gesamte Impulsfolge nicht invertiert. Da der Empfänger über den ursprünglichen Code der in der empfangenden Impulsgruppe verwendeten Zufallszahlenfolge verfügt, kann er feststellen, ob das bei ihm eingehende Signal einer Impulsgruppe gegenüber den aktuellen Werten der Zufallszahlenfolge invertiert oder nicht invertiert ist und so den enthaltenen Informationswert entschlüsseln. Eine technische Realisierungsmöglichkeit der Code-Entschlüsselung zur Ermittlung des übertragenen Informationswertes wird weiter unten anhand von Figur 4 beschrieben.

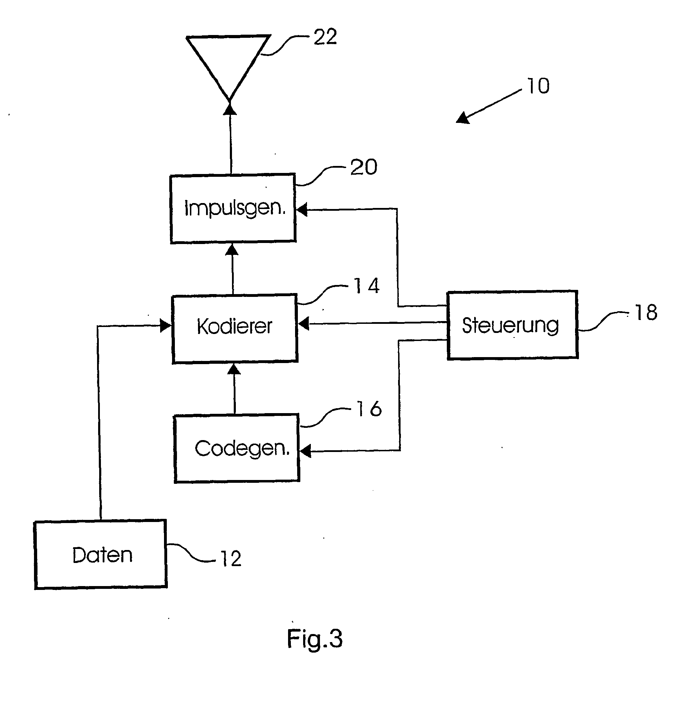

Figur 3 zeigt ein Ausführungsbeispiel eines Ultrabreitband-Senders 10. Der Sender weist einen Eingang für Daten 12 auf. Die am Dateneingang 12 anliegenden Daten überträgt der Sender 10 mit Hilfe des erfindungsgemäßen Ultrabreitband-Datenübertragungsverfahrens an einen Empfänger. Der Dateneingang kann beispielsweise in digitaler Form vorliegende Audio-Daten, Bild-Daten, Video-Daten oder sonstige Daten an einen ihm nachgeschalteten Kodierer 14 abgeben. Der Kodierer 14 ist über einen weiteren Eingang mit einem Code-Generator 16 verbunden. Der Code-Generator 16 ist ein Quasi-Zufallsgenerator, der dem Kodierer einen Zufallszahlencode mit einer Breite überträgt, die in unterschiedlichen Ausführungsbeispielen entweder fest vorgegeben ist oder von einer Steuereinheit 18 in Anpassung an aktuelle Übertragungsbedingungen vorgegeben werden kann. Ein Impulsgenerator 20 ist eingangsseitig mit dem Kodierer 14 verbunden und erhält von diesem die Steuerinformationen zur Erzeugung einer mit einem Zufallscode kodierten, Nutzinformation tragenden Impulsgruppe. Die Kombination des Kodierers 14, des Code-Generators 16, der Steuereinheit 18 und des Impulsgenerators 20 bildet einen Impulsgruppengenerator. Die vom Impulsgruppengenerator erzeugten Impulsgruppen werden über eine Antenne 22 abgestrahlt.

Die Steuereinheit 18 gibt dem Impulsgenerator, dem Code-Generator und dem Kodierer die Anzahl der Einzelimpulse pro Impulsgruppe und die Zeitabstände zwischen den Einzelimpulsen einer Impulsgruppe in Abhängigkeit von der Zufallszahlenfolge vor. Damit kann auch in schwierigem Umfeld die Übertragung robuster gemacht werden.

Der Code-Generator 16 verfügt in einem Ausführungsbeispiel über eine Anzahl unterschiedlicher Quasi-Zufallszahlenfolgen, etwa in Form unterschiedlicher Zufallsfolgen-Generatoren, die unabhängig voneinander Zufallszahlen ausgeben können. Die Steuereinheit 18 gibt dem Code-Generator 16 vor, welche Zufallszahlenfolge für eine aktuelle Übertragung verwendet werden soll. Auf diese Weise wird eine Kanalkodierung erzielt.

Figur 4 zeigt ein Ausführungsbeispiel einer Ultrabreitband-Empfangsvorrichtung 30. Einer Antenne 32 sind parallel zwei Korrelatoren 34 und 36 nachgeschaltet. Beide Korrelatoren leiten ihr Ausgangssignal einer Signalverarbeitungseinheit 38 zu, deren Ausgang mit einer Datenausgabeeinheit 40 verbunden ist.

Den Korrelatoren 34 und 36 vorgeschaltet sind zwei Impulsgruppengeneratoren, deren Funktion dem senderseitigen Impulsgruppengenerator entsprechen. Dem Korrelator 34 sind ein Impulsgenerator 42 und ein Kodierer 44 zugeordnet. Dem Korrelator 36 sind ein Impulsgenerator 46 und ein Kodierer 48 zugeordnet. Die Kodierer 44 und 48 erhalten von einem Code-Generator 50 denselben Code. Eine Steuereinheit 52 steuert in gleicher Weise wie die Steuereinheit 18 des Senders der Figur 3 parallel den Betrieb der Kodierer 44 und 48 sowie der Impulsgeneratoren 42 und 46. Weiterhin ist sie ausgangsseitig mit dem Codegenerator 50 verbunden.

Im Betrieb des Empfängers der Figur 4 wird ein empfangenes Signal den Korrelatoren 34 und 36 zugeleitet. Der Korrelator 34 bestimmt die Korrelation des empfangenen Signals mit einem auf den aktuellen Werten der Zufallsfolge basierenden Signalmuster einer Impulsgruppe. Der Kodierer 44 kodiert dabei eine logische 1 in das Signalmuster, das der Impulsgenerator 42 erzeugt. Auf der anderen Seite kodiert der Kodierer 48 eine logische 0 in ein Signalmuster, das der Impulsgenerator 46 erzeugt, und das ansonsten auf den selben Werten der Zufallszahlenfolge beruht, die der Code-Generator 50 ausgibt. Wenn Sender und Empfänger die selben Werte der Zufallszahlenfolge verwenden, wird einer der Korrelatoren 34 und 36 ein signifikantes Ausgangssignal an die Signalverarbeitungseinheit 38 ausgeben, während der andere kein signifikantes Ausgangssignal aufweist. Dieses Muster zeigt zunächst an, dass ein Bit gültig übertragen und empfangen wurde. Die Signalverarbeitungseinheit ermittelt aus dem Eingang, an dem das von 0 verschiedene Signal anliegt, von welchen der beiden Korrelatoren 34 und 36 das Signal stammt. Aus dieser Information kann dann auch die mit der empfangenen Impulsgruppe übertragene Bit-Information ermittelt werden. Der jeweilige Bit-Wert wird an die Datenausgabe 40 weitergeleitet.

Ein Ausführungsbeispiel einer Sende-Empfangsvorrichtung weist einen Sender gemäß Figur 3 und einen Empfänger gemäß Figur 4 auf.

## Patentansprüche

1. Ultrabreitband-Informationsübertragungsverfahren, mit
- einem ersten Kodierschritt auf der Seite des Senders, bei dem eine Impulsgruppe, die aus einer vorbestimmten Vielzahl Einzelimpulsen auf eine solche Weise gebildet wird, dass sich die Einzelimpulse ein und derselben Impulsgruppe nach der Impulsformung teilweise zeitlich überlappen, in Abhängigkeit von Werten einer Zufallszahlenfolge kodiert wird, und mit
- einem Korrelationsschritt auf der Seite des Empfängers, in dem eine Korrelation eines Empfangssignals mit einem Signalmuster durchgeführt wird,
**dadurch gekennzeichnet, dass** das Signalmuster der bei Verwendung derselben Werte der Zufallszahlenfolge zu erwartenden gesamten Impulsgruppe entspricht.

2. Ultrabreitband-Informationsübertragungsverfahren nach Anspruch 1, mit einem zweiten Kodierschritt auf Seiten des Senders vor, während oder nach dem ersten Kodierschritt, in dem mindestens ein als Information zu übertragender Bitwert in der Impulsgruppe entsprechend einer vorbestimmten Kodierregel kodiert wird.

3. Ultrabreitband-Informationsübertragungsverfahren nach Anspruch 2, bei dem zur Ermittlung des übertragenen Bitwerts im Korrelationsschritt eine Korrelation des Empfangssignals mit einem ersten und mit einem zweiten zu erwartenden Signalmuster durchgeführt wird, wobei das erste und zweite Signalmuster mit denselben Werten der Zufallszahlenfolge kodiert sind und das erste Signalmuster einer Impulsgruppe entspricht, die im zweiten Kodierschritt mit einem ersten Bitwert kodiert wird, und das zweite Signalmuster einer Impulsgruppe entspricht, die im zweiten Kodierschritt mit einem zweiten, komplementären Bitwert kodiert wird.

4. Ultrabreitband-Informationsübertragungsverfahren nach Anspruch 3, bei dem die Korrelation des Empfangssignals mit dem ersten und dem zweiten Signalmuster parallel erfolgt.

5. Ultrabreitband-Informationsübertragungsverfahren nach Anspruch 1, bei dem im ersten Kodierschritt die Einzelimpulse in Abhängigkeit vom jeweils aktuellen Wert der Zufallszahlenfolge phasenmoduliert werden.

6. Ultrabreitband-Informationsübertragungsverfahren nach Anspruch 1, bei dem der Sender zusätzlich eine Modulation des zeitlichen Abstandes aufeinander folgender Impulsgruppen durchführt (erste Abstandsmodulation).

7. Ultrabreitband-Informationsübertragungsverfahren nach Anspruch 6, bei dem die erste Abstandsmodulation derart erfolgt, dass die spektrale Energieverteilung vom Sender ausgehender Signale vorbestimmte Grenzwerte nicht überschreitet.

8. Ultrabreitband- Informationsübertragungsverfahren nach Anspruch 2, bei dem die erste Abstandsmodulation in Abhängigkeit von der Zufallszahlenfolge erfolgt.

9. Ultrabreitband- Informationsübertragungsverfahren nach einem der vorstehenden Ansprüche, bei dem Sender und Empfänger die gleiche Zufallsfolge aus einer Anzahl Zufallszahlenfolgen auswählen und der erste Kodierschritt zugleich zur Kanalkodierung verwendet wird.

10. Ultrabreitband-Informationsübertragungsverfahren nach einem der vorstehenden Ansprüche, bei dem der Sender eine Modulation des zeitlichen Abstandes der Einzelimpulse der Impulsgruppe von einander in Abhängigkeit von Werten der Zufallszahlenfolge durchführt (zweite Abstandsmodulation).

11. Ultrabreitband-Informationsübertragungsverfahren nach einem der vorstehenden Ansprüche, bei dem Sender und Empfänger vor dem Beginn der Informationsübertragung eine Synchronisation der Zufallszahlenfolge durchführen.

12. Ultrabreitband-Informationsübertragungsverfahren nach einem der vorstehenden Ansprüche, bei dem der Sender eine dem Empfänger bekannte Trainingssequenz von Impulsgruppen zum Empfänger überträgt.

13. Ultrabreitband-Informationsübertragungsverfahren nach einem der vorstehenden Ansprüche, bei dem die vorbestimmte Regel zur Kodierung eines Bitwerts das Invertieren oder Nichtinvertieren, je nach Bitwert, aller Einzelimpulse einer Impulsgruppe vorsieht.

14. Ultrabreitband-Informationsübertragungsverfahren nach einem der vorstehenden Ansprüche, bei dem zwei Bitwerte in einer Impulsgruppe übertragen werden, wobei ein erster Bitwert in einer ersten vorbestimmte Anzahl Einzelimpulsen kodiert wird und ein zweiter Bitwert in der verbleibenden Anzahl Einzelimpulsen kodiert wird.

15. Ultrabreitband-Informationsübertragungsverfahren nach Anspruch 14, bei dem zur Ermittlung der übertragenen Bitwerte auf Seiten des Empfängers im Korrelationsschritt eine Korrelation des Empfangssignals mit vier zu erwartenden Signalmustern durchgeführt wird.

16. Ultrabreitband-Informationsübertragungsverfahren nach einem der vorstehenden Ansprüche, bei dem ein aktueller Wert einer von den momentanen Übertragungsbedingungen abhängigen Größe ermittelt wird und die Anzahl der Einzelimpulse der Impulsgruppe in Abhängigkeit von dem aktuellen Wert bestimmt wird.

17. Ultrabreitband-Sendevorrichtung, mit einem Impulsgruppengenerator umfassend
- einen Impulsgenerator, der ausgebildet ist, eine Impulsgruppe aus einer vorbestimmten Vielzahl Einzelimpulsen mit einem vorbestimmbaren Zeitabstand von einander abzugeben,
- einen Codegenerator, der ausgebildet ist, von den Werten einer Zufallszahlenfolge abhängige Zufallssignale abzugeben,
- eine Kodiereinheit, die ausgebildet ist, einen vom Impulsgenerator abgegebenen oder abzugebenden Einzelimpuls in Abhängigkeit vom aktuellen Zufallssignal zu kodieren, und
- eine Steuereinheit, die mit dem Impulsgenerator verbunden und die ausgebildet ist, den Impulsgenerator zu vorbestimmbaren Zeitpunkten zur Abgabe einer Impulsgruppe mit einer vorbestimmten Vielzahl von kodierten Einzelimpulsen mit vorbestimmten Zeitabständen voneinander anzusteuern, **dadurch gekennzeichnet, dass**
- die Steuereinheit zusätzlich ausgebildet ist, den Impulsgenerator und die Kodiereinheit anzusteuern, die kodierte Impulsgruppe aus einer vorbestimmten Vielzahl Einzelimpulsen in Abhängigkeit von Werten der Zufallszahlenfolge auf eine solche Weise zu bilden, dass sich die Einzelimpulse ein und derselben Impulsgruppe nach der Impulsformung teilweise zeitlich überlappen.

18. Ultrabreitband-Sendevorrichtung nach Anspruch 17, bei dem die Steuereinheit ausgebildet ist, den Impulsgenerator anzusteuern, eine Modulation des zeitlichen Abstandes aufeinander folgender Impulsgruppen durchzuführen(erste Abstandsmodulation).

19. Ultrabreitband-Sendevorrichtung nach Anspruch 18, bei dem die Steuereinheit die erste Abstandsmodulation derart steuert, dass die spektrale Energieverteilung vom Sender ausgehender Signale vorbestimmte Grenzwerte nicht überschreitet.

20. Ultrabreitband-Sendevorrichtung nach Anspruch 18 oder 19, bei dem die erste Abstandsmodulation in Abhängigkeit von der Zufallszahlenfolge erfolgt.

21. Ultrabreitband- Sendevorrichtung nach einem der Ansprüche 17 bis 20, bei dem die Steuereinheit ausgebildet ist, die Zufallszahlenfolge auszuwählen, deren Werte den ausgegebenen Zufallssignalen des Codegenerators zugrunde liegt.

22. Ultrabreitband- Sendevorrichtung nach einem der Ansprüche 17 bis 21, bei dem die Steuereinheit ausgebildet ist, den Impulsgenerator zu einer Modulation des zeitlichen Abstandes der Einzelimpulse der Signalimpulsgruppe von einander in Abhängigkeit von Werten der Zufallszahlenfolge (zweite Abstandsmodulation) anzusteuern.

23. Ultrabreitband-Empfangsvorrichtung, mit einem Impulsgruppengenerator umfassend
- einen Impulsgenerator, der ausgebildet ist, eine Impulsgruppe aus einer vorbestimmten Vielzahl Einzelimpulsen mit einem vorbestimmbaren Zeitabstand von einander abzugeben,
- einen Codegenerator, der ausgebildet ist, von den Werten einer Zufallszahlenfolge abhängige Zufallssignale abzugeben,
- eine erste Kodiereinheit, die ausgebildet ist, einen vom Impulsgenerator abgegebenen oder abzugebenden Einzelimpuls in Abhängigkeit vom aktuellen Zufallssignal zu kodieren, und
- eine Steuereinheit, die mit dem Impulsgenerator verbunden und die ausgebildet ist, den Impulsgenerator zu vorbestimmbaren Zeitpunkten zur Abgabe mindestens eines Signalmusters in Form einer Impulsgruppe mit einer vorbestimmten Vielzahl von kodierten Einzelimpulsen mit vorbestimmten Zeitabständen voneinander anzusteuern, und mit
- einer Korrelationseinheit, die mit dem Impulsgruppengenerator verbunden und ausgebildet ist, ein von der Korrelation eines Empfangssignals mit dem Signalmuster abhängiges Ausgangssignal abzugeben, **dadurch gekennzeichnet, dass**
- die Steuereinheit zusätzlich ausgebildet ist, den Impulsgenerator und die Kodiereinheit anzusteuern, die kodierte Impulsgruppe aus einer vorbestimmten Vielzahl Einzelimpulsen in Abhängigkeit von Werten der Zufallszahlenfolge auf eine solche Weise zu bilden, dass sich die Einzelimpulse ein und derselben Impulsgruppe nach der Impulsformung teilweise zeitlich überlappen.

24. Ultrabreitband-Empfangsvorrichtung nach Anspruch 23, bei der die Korrelationseinheit einen temporären Speicher für das Signalmuster aufweist.

25. Ultrabreitband-Empfangsvorrichtung nach Anspruch 23, bei der der Impulsgruppengenerator eine Filtereinrichtung aufweist, die ausgebildet ist, die Impulsgruppe entsprechend einer vorbestimmten Filtercharakteristik zu modifizieren.

26. Ultrabreitband-Empfangsvorrichtung nach Anspruch 23, bei der der Impulsgruppengenerator eine zweite Kodiereinheit aufweist, die ausgebildet ist, mindestens einen Bitwert in der Impulsgruppe entsprechend einer vorbestimmten Kodierregel zu kodieren.

27. Ultrabreitband-Empfangsvorrichtung nach Anspruch 23, bei der die zweite Kodiereinheit ausgebildet ist, zusätzlich in einer Kopie der Impulsgruppe den komplementären Bitwert entsprechend der vorbestimmten Kodierregel zu kodieren, und bei der der Impulsgruppengenerator ein erstes und ein zweites Signalmuster mit komplementären Bitwerten ausgibt.

28. Ultrabreitband-Empfangsvorrichtung nach Anspruch 23, bei der die Korrelationseinheit zwei Korrelatoren aufweist, deren erster eine Korrelation des Empfangssignals mit dem ersten Signalmuster und deren zweiter eine Korrelation des Empfangssignals mit dem zweiten Signalmuster ermittelt.

29. Ultrabreitband-Sende-Empfangs-Vorrichtung, mit einer Ultrabreitband-Sendevorrichtung nach einem der Ansprüche 17 bis 22 und einer Ultrabreitband-Empfangsvorrichtung nach einem der Ansprüche 23 bis 28.

## Claims

1. Ultra-broadband data transmission process, having
- a first coding step on the send side, in which a pulse group formed from a predetermined number of individual pulses in such a manner that the individual pulses of one and the same pulse group partially overlap in time after the pulse forming, is coded as a function of values of a random number sequence, and having
- a correlating step on the receive side, in which a receive signal is correlated with a signal pattern,
**characterised in that** the signal pattern corresponds to the entire pulse group anticipated when the same values of the random number sequence are used.

2. Ultra-broadband data transmission process according to claim 1, having a second coding step on the send side, before, during or after the first coding step, in which at least one bit sign in the pulse group, which is to be transmitted as an item of information, is coded in accordance with a predetermined coding rule.

3. Ultra-broadband data transmission process according to claim 2, wherein in order to determine the bit sign transmitted in the correlation step the receive signal is correlated with a first and a second anticipated signal pattern, the first and second signal pattern being coded with the same values of the random number sequence and the first signal pattern corresponding to a pulse group which is coded with a first bit sign in the second coding step, and the second signal pattern corresponding to a pulse group which is coded with a second, complementary bit sign in the second coding step.

4. Ultra-broadband data transmission process according to claim 3, wherein the correlation of the receive signal with the first and second signal pattern is carried out in parallel.

5. Ultra-broadband data transmission process according to claim 1, wherein in the first coding step the individual pulses are phase-modulated as a function of the present value of the random number sequence.

6. Ultra-broadband data transmission process according to claim 1, wherein the sender additionally carries out modulation of the time interval between successive pulse groups (first interval modulation).

7. Ultra-broadband data transmission process according to claim 6, wherein the first interval modulation is carried out such that the spectral energy distribution of signals emanating from the sender does not exceed predetermined threshold values.

8. Ultra-broadband data transmission process according to claim 2, wherein the first interval modulation takes place as a function of the random number sequence.

9. Ultra-broadband data transmission process according to one of the preceding claims, wherein the sender and receiver select the same random sequence from a number of random number sequences and the first coding step is simultaneously used for the channel coding.

10. Ultra-broadband data transmission process according to one of the preceding claims, wherein the sender carries out modulation of the time interval of the individual pulses of the pulse group from one another as a function of values of the random number sequence (second interval modulation).

11. Ultra-broadband data transmission process according to one of the preceding claims, wherein the sender and receiver carry out a synchronisation of the random number sequence before the start of the data transmission.

12. Ultra-broadband data transmission process according to one of the preceding claims, wherein the sender transmits to the receiver a training sequence of pulse groups that is known to the receiver.

13. Ultra-broadband data transmission process according to one of the preceding claims, wherein the predetermined rule for coding a bit sign envisages inverting or not inverting all the individual pulses of a pulse group, depending on the bit sign.

14. Ultra-broadband data transmission process according to one of the preceding claims, wherein two bit signs are transmitted in a pulse group, a first bit sign being coded in a first predetermined number of individual pulses and a second bit sign being coded in the remaining number of individual pulses.

15. Ultra-broadband data transmission process according to claim 14, wherein in order to determine the bit signs transmitted, in the correlation step the receive signal is correlated with four anticipated signal patterns on the receive side.

16. Ultra-broadband data transmission process according to one of the preceding claims, wherein a current value of a variable that is dependent on the transmission conditions at that moment is determined and the number of individual pulses of the pulse group is determined as a function of the current value.

17. Ultra-broadband transmitting apparatus having a pulse group generator comprising
- a pulse generator that is designed to deliver a pulse group from a predetermined number of individual pulses having a predeterminable time interval from one another,
- a code generator that is designed to deliver random signals dependent on the values of a random number sequence,
- a coding unit that is designed to code an individual pulse delivered, or about to be delivered, by the pulse generator, as a function of the current random signal, and
- a control unit that is connected to the pulse generator and is designed to actuate the pulse generator at predeterminable times to deliver a pulse group with a predetermined plurality of coded individual pulses at predetermined time intervals from one another,
**characterised in that**
- the control unit is additionally designed to actuate the pulse generator and the coding unit to form the coded pulse group from a predetermined number of individual pulses as a function of values of the random number sequence in such a way that the individual pulses of one and the same pulse group partially overlap in time after the pulse forming.

18. Ultra-broadband transmitting apparatus according to claim 17, wherein the control unit is designed to actuate the pulse generator to carry out modulation of the time interval between successive pulse groups (first interval modulation).

19. Ultra-broadband transmitting apparatus according to claim 18, wherein the control unit controls the first interval modulation in such a way that the spectral energy distribution of signals emanating from the sender does not exceed predetermined threshold values.

20. Ultra-broadband transmitting apparatus according to claim 18 or 19, wherein the first interval modulation is carried out as a function of the random number sequence.

21. Ultra-broadband transmitting apparatus according to one of claims 17 to 20, wherein the control unit is designed to select the random number sequence the values of which form the basis of the random signals delivered by the code generator.

22. Ultra-broadband transmitting apparatus according to one of claims 17 to 21, wherein the control unit is designed to actuate the pulse generator to carry out modulation of the time interval between individual pulses of the signal pulse group from one another as a function of values of the random number sequence (second interval modulation).

23. Ultra-broadband receiving apparatus having a pulse group generator comprising
- a pulse generator that is designed to deliver a pulse group from a predetermined number of individual pulses having a predeterminable time interval from one another,
- a code generator that is designed to deliver random signals dependent on the values of a random number sequence,
- a first coding unit that is designed to code an individual pulse delivered, or about to be delivered, by the pulse generator, as a function of the current random signal, and
- a control unit that is connected to the pulse generator and is designed to actuate the pulse generator at predeterminable times to deliver at least one signal pattern in the form of a pulse group with a predetermined plurality of coded individual pulses at predetermined time intervals from one another, and with
- a correlation unit that is connected to the pulse group generator and is designed to deliver an output signal that is dependent on the correlation of a receive signal with the signal pattern,
**characterised in that**
- the control unit is additionally designed to actuate the pulse generator and the coding unit to form the coded pulse group from a predetermined number of individual pulses as a function of values of the random number sequence in such a way that the individual pulses of one and the same pulse group partially overlap in time after the pulse forming.

24. Ultra-broadband receiving apparatus according to claim 23, wherein the correlation unit comprises a temporary memory for the signal pattern.

25. Ultra-broadband receiving apparatus according to claim 23, wherein the pulse group generator has a filter device that is designed to modify the pulse group according to a predetermined filter characteristic.

26. Ultra-broadband receiving apparatus according to claim 23, wherein the pulse group generator has a second coding unit that is designed to code at least one bit sign in the pulse group in accordance with a predetermined coding rule.

27. Ultra-broadband receiving apparatus according to claim 23, wherein the second coding unit is designed additionally to code the complementary bit sign in a copy of the pulse group in accordance with the predetermined coding rule, and wherein the pulse group generator emits a first and a second signal pattern with complementary bit signs.

28. Ultra-broadband receiving apparatus according to claim 23, wherein the correlation unit comprises two correlators the first of which ascertains a correlation of the receive signal with the first signal pattern and the second of which ascertains a correlation of the receive signal with the second signal pattern.

29. Ultra-broadband sending and receiving apparatus, having an ultra-broadband sending apparatus according to one of claims 17 to 22 and an ultra-broadband receiving apparatus according to one of claims 23 to 28.

## Revendications

1. Procédé de transmission d'informations à bande ultralarge comprenant :
- un premier stade de codage du côté de l'émetteur, dans lequel on code, en fonction de valeurs d'une suite de nombres aléatoires, un groupe d'impulsions qui est formé à partir d'une pluralité, déterminée à l'avance, d'impulsions individuelles d'une façon telle que les impulsions individuelles d'un seul et même groupe d'impulsions se chevauchent en partie dans le temps après la formation des impulsions, et comprenant
- un stade de corrélation du côté du récepteur, dans lequel on effectue une corrélation avec un modèle de signal,
**caractérisé en ce que** le modèle de signal correspond au groupe d'impulsions complet auquel on s'attend lors de l'utilisation des mêmes valeurs de la suite de nombres aléatoires.

2. Procédé de transmission d'informations à bande ultralarge suivant la revendication 1, comprenant un deuxième stade de codage du côté de l'émetteur avant, pendant ou après le premier stade de codage, dans lequel, on code conformément à une règle de codage déterminée à l'avance, au moins une valeur de bit, à transmettre comme information, du groupe d'impulsions.

3. Procédé de transmission d'informations à bande ultralarge suivant la revendication 2, dans lequel, pour la détermination de la valeur de bit à transmettre dans le stade de corrélation, on effectue une corrélation du signal de réception avec un premier et avec deuxième modèles de signal auxquels on s'attend, le premier et le deuxième modèles de signal étant codés par les mêmes valeurs de la suite de nombres aléatoires et le premier modèle de signal correspondant à un groupe d'impulsions, qui est codé, dans le deuxième stade de codage, avec une première valeur de bit et le deuxième modèle de signal correspondant à un groupe d'impulsions, qui est codé, dans le deuxième stade de codage, avec une deuxième valeur de bit complémentaire.

4. Procédé de transmission d'informations à bande ultralarge suivant la revendication 3, dans lequel on effectue en parallèle la corrélation du signal de réception avec le premier et le deuxième modèles de signal.

5. Procédé de transmission d'informations à bande ultralarge suivant la revendication 1, dans lequel le premier stade de codage, on module en phase les impulsions individuelles en fonction de la valeur instantanée respective de la suite de nombres aléatoires.

6. Procédé de transmission d'informations à bande ultralarge suivant la revendication 1, dans lequel l'émetteur effectue supplémentairement une modulation de la distance dans le temps entre des groupes d'impulsions qui se succèdent (première modulation de distance).

7. Procédé de transmission d'informations à bande ultralarge suivant la revendication 6, dans lequel on effectue la première modulation de distance de façon à ce que la répartition spectrale de l'énergie de signaux issus de l'émetteur ne dépasse pas des valeurs limites déterminées à l'avance.

8. Procédé de transmission d'informations à bande ultralarge suivant la revendication 2, dans lequel on effectue la première modulation de distance en fonction de la suite de nombres aléatoires.

9. Procédé de transmission d'informations à bande ultralarge suivant l'une des revendications précédentes dans lequel, l'émetteur et le récepteur choisissent la même suite aléatoire dans un nombre de suites de nombres aléatoires et le premier stade de codage est utilisé en même temps pour le codage de canal.

10. Procédé de transmission d'informations à bande ultralarge suivant l'une des revendications précédentes, dans lequel l'émetteur effectue une modulation de la distance dans le temps des impulsions individuelles du groupe d'impulsions les unes par rapport aux autres en fonction de valeurs de la suite de nombres aléatoires (deuxième modulation de distance).

11. Procédé de transmission d'informations à bande ultralarge suivant l'une des revendications précédentes, dans lequel l'émetteur et le récepteur effectuent, avant le début de la transmission d'informations, une synchronisation de la suite de nombres aléatoires.

12. Procédé de transmission d'informations à bande ultralarge suivant l'une des revendications précédentes, dans lequel l'émetteur transmet au récepteur une séquence d'apprentissage de groupe d'impulsions, qui est connue du récepteur.

13. Procédé de transmission d'informations à bande ultralarge suivant l'une des revendications précédentes, dans lequel la règle, déterminée à l'avance, de codage d'une valeur de bit prévoit l'inversion ou la non inversion, suivant la valeur du bit, de toutes les impulsions individuelles d'un groupe d'impulsions.

14. procédé de transmission d'informations à bande ultralarge suivant l'une des revendications précédentes, dans lequel on transmet deux valeurs de bit dans un groupe d'impulsions, une première valeur de bit étant codée dans un premier nombre, déterminé à l'avance, d'impulsions individuelles et une deuxième valeur de bit dans le nombre restant d'impulsions individuelles.

15. Procédé de transmission d'informations à bande ultralarge suivant la revendication 14, dans lequel, pour la détermination des valeurs de bit à transmettre du côté du récepteur dans le stade de corrélation, on effectue une corrélation du signal de réception avec quatre modèles de signal auxquels on s'attend.

16. Procédé de transmission d'informations à bande ultralarge suivant l'une des revendications précédentes, dans lequel on détermine une valeur instantanée d'une grandeur qui dépend des conditions instantanées de transmission et on définit le nombre des impulsions individuelles du groupe d'impulsions en fonction de la valeur instantanée.

17. Dispositif d'émission à bande ultralarge, ayant un générateur de groupe d'impulsions et comprenant
- un générateur d'impulsions qui est constitué de manière à émettre un groupe d'impulsions constitué d'une pluralité, déterminée à l'avance, d'impulsions individuelles, ayant une distance dans le temps les unes par rapport aux autres, qui peut être déterminée à l'avance,
- un générateur de code, qui est constitué de manière à émettre des signaux aléatoires qui dépendent des valeurs d'une suite de nombres aléatoires,
- une unité de codage, qui est constituée pour coder, en fonction du signal aléatoire instantané, une impulsion individuelle émise ou à émettre par le générateur d'impulsions, et
- une unité de commande, qui est reliée au générateur d'impulsions et qui est constituée pour commander le générateur d'impulsions, à des instants pouvant être déterminés à l'avance pour l'émission d'un groupe d'impulsions ayant une pluralité déterminée à l'avance d'impulsions individuelles codées ayant des distances dans le temps les unes par rapport aux autres pouvant être déterminées à l'avance, **caractérisé en ce que**
- le dispositif de commande est constitué en outre pour commander le générateur d'impulsions et l'unité de codage pour former le groupe d'impulsions codé à partir d'une pluralité, déterminée à l'avance, d'impulsions individuelles en fonction de valeurs de la suite de nombres aléatoires d'une façon telle que les impulsions individuelles d'un seul et même groupe d'impulsions se chevauchent en partie dans le temps après la formation des impulsions.

18. Dispositif d'émission à bande ultralarge suivant la revendication 17, dans lequel l'unité de commande est constituée pour commander le générateur d'impulsions pour effectuer une modulation de la distance dans le temps de groupes d'impulsions, qui se succèdent (première modulation de distance).

19. Dispositif d'émission à bande ultralarge suivant la revendication 18, dans lequel l'unité de commande commande la première modulation de distance de façon à ce que la répartition spectrale de l'énergie de signaux issus de l'émetteur ne dépasse pas des valeurs limites déterminées à l'avance.

20. Dispositif d'émission à bande ultralarge suivant la revendication 18 ou 19, dans lequel la première modulation de distance s'effectue en fonction de la suite de nombres aléatoires.

21. Dispositif d'émission à bande ultralarge suivant l'une des revendications 17 à 20, dans lequel l'unité de commande est constituée de manière à sélectionner la suite de nombres aléatoires dont les valeurs sont à la base des signaux aléatoires du générateur de code, qui sont émis.

22. Dispositif d'émission à bande ultralarge suivant l'une des revendications 17 à 21, dans lequel l'unité de commande est constituée pour commander le générateur d'impulsions pour avoir une modulation de la distance dans le temps des impulsions individuelles du groupe d'impulsions de signal les unes par rapport aux autres en fonction de valeurs de la suite de nombres aléatoires (deuxième modulation de distance).

23. Dispositif de réception à bande ultralarge ayant un générateur de groupes d'impulsions et comprenant
- un générateur d'impulsions, qui est constitué pour émettre un groupe d'impulsions composé d'une pluralité, déterminée à l'avance, d'impulsions individuelles, ayant une distance dans le temps les unes par rapport aux autres, qui peut être déterminée à l'avance,
- un générateur de code, qui est constitué pour émettre des signaux aléatoires dépendant des valeurs d'une suite de nombres aléatoires,
- une première unité de code, qui est constituée pour coder, en fonction du signal aléatoire instantané, une impulsion individuelle émise ou à émettre par le générateur d'impulsions, et
- une unité de commande, qui est reliée au générateur d'impulsions et qui est constituée pour commander le générateur d'impulsions à des instants pouvant être déterminés à l'avance pour l'émission d'au moins un modèle de signal sous la forme d'un groupe d'impulsions ayant une pluralité, déterminée à l'avance, d'impulsions individuelles codées, ayant des distances dans le temps les unes par rapport aux autres, qui sont déterminées à l'avance, et comprenant
- une unité de corrélation, qui est reliée au générateur de groupes d'impulsions et qui est constituée pour émettre un signal de sortie, qui dépend de la corrélation d'un signal de réception avec le modèle de signal,
**caractérisé en ce que**
- l'unité de commande est constituée en plus pour commander le générateur d'impulsions et l'unité de codage pour former le groupe d'impulsions codé, composé d'une pluralité déterminée à l'avance d'impulsions individuelles, en fonction de valeurs de la suite de nombres aléatoires d'une façon telle que les impulsions individuelles d'un seul et même groupe d'impulsions se chevauchent en partie dans le temps après la formation des impulsions.

24. Dispositif de réception à bande ultralarge suivant la revendication 23, dans lequel l'unité de corrélation a une mémoire temporaire pour le modèle de signal.

25. dispositif de réception à bande ultralarge suivant la revendication 23, dans lequel le générateur de groupes d'impulsions a un dispositif de filtrage, qui est constitué pour modifier le groupe d'impulsions conformément à une caractéristique de filtrage déterminée à l'avance.

26. Dispositif de réception à bande ultralarge suivant la revendication 23, dans lequel le générateur de groupes d'impulsions a une deuxième unité de codage, qui est constituée pour coder au moins une valeur de bit dans le groupe d'impulsions conformément à une règle de codage déterminée à l'avance.

27. Dispositif de réception à bande ultralarge suivant la revendication 23, dans lequel la deuxième unité de codage est constituée pour coder en outre dans une copie du groupe d'impulsions, la valeur de bit complémentaire conformément à la règle de codage déterminée à l'avance et dans lequel le générateur de groupes d'impulsions émet un premier et un deuxième modèles de signal ayant des valeurs de bit complémentaires.

28. Dispositif de réception à bande ultralarge suivant la revendication 23, dans lequel l'unité de corrélation a deux corrélateurs, dont le premier détermine une corrélation du signal de réception avec le premier modèle de signal et dont le deuxième détermine une corrélation du signal de réception avec le deuxième modèle de signal.

29. Dispositif d'émission-réception à bande ultralarge ayant un dispositif d'émission à bande ultralarge selon l'une des revendications 17 à 22 et un dispositif de réception à bande ultralarge suivant l'une des revendications 23 à 28.
